# EUROPEAN PATENT APPLICATION

(11) **EP 1 577 121 A2**
(43) Date of publication of application: **21.09.2005**
(21) Application number: 05002184.9
(22) Date of filing: 02.02.2005
(51) Int. Cl.: B60C 9/20, B29D 30/38, B29C 69/02, B29C 47/02

(54) **Producing method of steel cord ply, steel cord ply, and pneumatic tire using the same**

(30) Priority: 18.03.2004 JP 2004078810
(71) Applicant: SUMITOMO RUBBER INDUSTRIES LIMITED, Hyogo-ken (JP)
(72) Inventor: Suzuki, Kazuya, Chuo-ku Kobe-shi Hyogo-ken (JP)
(74) Representative: Manitz, Finsterwald & Partner GbR

(57) **Abstract**

A producing method of a steel cord play includes first and second topping steps. In the first topping step, a first topping rubber is concentrically attached to a periphery of each steel cords. With this, steel cords having rubber which are pre-coated with the first topping rubber are formed. In the second topping step, a second topping rubber is attached to at least one surface of a steel cord array in which the steel cords having rubber are arranged, thereby forming a sheet-like steel cord ply. The first topping step is carried out immediately before the second topping step.

## Description

### BACKGROUND OF THE INVENTION

### Field of the Invention

The present invention relates to a producing method of a steel cord ply capable of enhancing peel strength between a steel cord and a topping rubber. The invention also relates to a steel cord ply and a pneumatic tire using the same.

### Prior Art

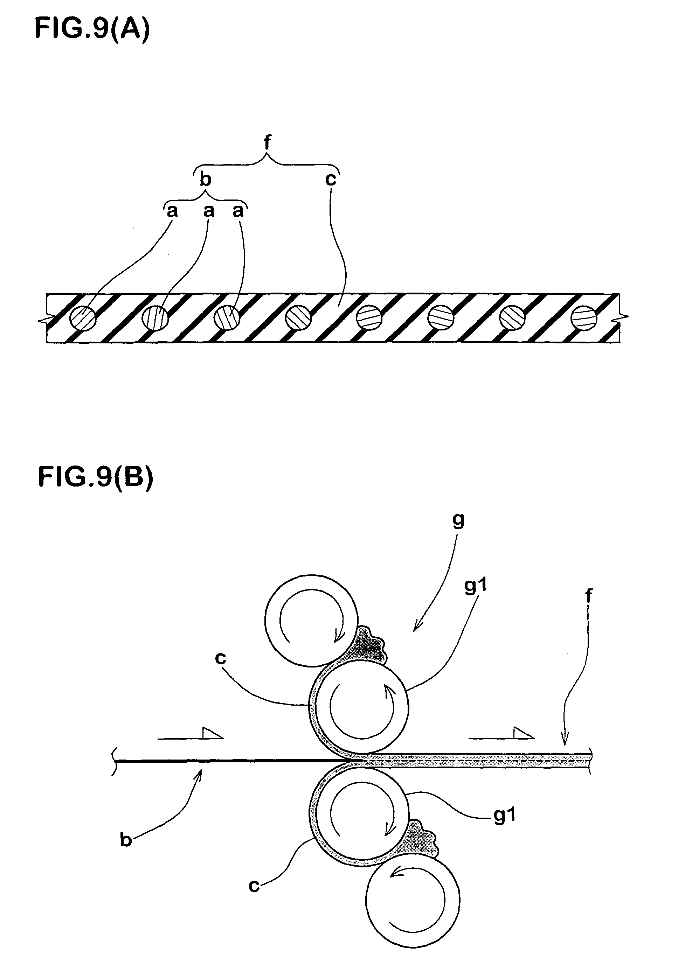

A steel cord ply f is frequently used for various rubber products such as tires. The steel cord ply f is formed in such a manner that steel cords (a) are arranged to form a steel cord array b and the steel cord array (b) is coated in a topping rubber (c) as shown in Fig. 9 (A). Conventionally, the steel cord ply (f) is formed through such a topping step that thinly extended topping rubber c is crimped on one side, preferably both sides of the steel cord array (b) using a calender (g) as shown in Fig. 9 (B).

However, the original adhesive strength between a steel cord (a) and rubber is not strong. Therefore, in the topping step, it is necessary to reduce rotation speed of a calender roll g1 so that the topping rubber (c) sufficiently permeates between filaments of the steel cord (a). This method is susceptible to improvement in terms of productivity.

As another method, Japanese Patent Application Laid-open No.H10-53981 proposes to coat a surface of the steel cord with resin. In the method described in this publication, however, since the surface of the steel cord is coated with resin, there are problems that the producing procedure becomes complicated and the costs are increased. Further, it is usually necessary to carry out the coating operation of resin at different place from that of the topping step and thus, the productivity is inferior.

### SUMMARY OF THE INVENTION

It is an object of the present invention to provide a steel cord ply capable of suppressing the peeling damage between a steel cord and a topping rubber without deteriorating the productivity, and to provide a producing method of the steel cord ply.

It is another object of the invention to provide a pneumatic tire in which its durability is enhanced by using the steel cord ply as a belt ply of the tire.

A first invention of this application provides

a producing method of a sheet-like steel cord ply, comprising:
a first topping step for concentrically attaching a first topping rubber to a periphery of each steel cords used for the steel cord ply, thereby forming a steel cord having rubber pre-coated with the first topping rubber; and
a second topping step for attaching a second topping rubber to at least one surface of a steel cord array in which the steel cords having rubber are arranged, thereby forming a sheet-like steel cord ply; wherein
the first topping step is carried out immediately before the second topping step.

A second invention of this application provides
a steel cord ply comprising
steel cords arranged substantially in parallel to each other;
a first topping rubber concentrically coating a periphery of each steel cords; and
a sheet-like second topping rubber for coating a periphery of the first topping rubber and made of rubber composite having smaller complex elastic modulus than that of the first topping rubber.

A third invention of the application provides a pneumatic tire in which the steel cord ply of the second invention is used as a belt ply.

According to the present invention, it is possible to efficiently produce a steel cord ply which suppresses a peel damage between the steel cord and the topping rubber without deteriorating the productivity.

### BRIEF DESCRIPTION OF THE DRAWINGS

Fig. 1 schematically shows steps of an embodiment of a producing method of the present invention;
Fig. 2 is an enlarged perspective view of an essential portion of a rubber attaching tool;
Fig. 3 is a sectional view of the rubber attaching tool;
Fig. 4 is a sectional view of a steel cord ply;
Fig. 5 is a sectional view of a steel cord ply of another embodiment;
Fig. 6 is a sectional view of a pneumatic tire;
Fig. 7 is a perspective view for explaining a test method of adhesive strength;
Fig. 8 is a diagram showing another embodiment of an apparatus which carries out first and second topping steps; and
Fig. 9 (A) is a sectional view of a conventional steel cord ply, and Fig. 9(B) is a diagram for explaining a topping step thereof.

### DETAILED DESCRIPTION OF THE PREFERRED EMBODIMENTS

An embodiment of the present invention will be explained based on the drawings.

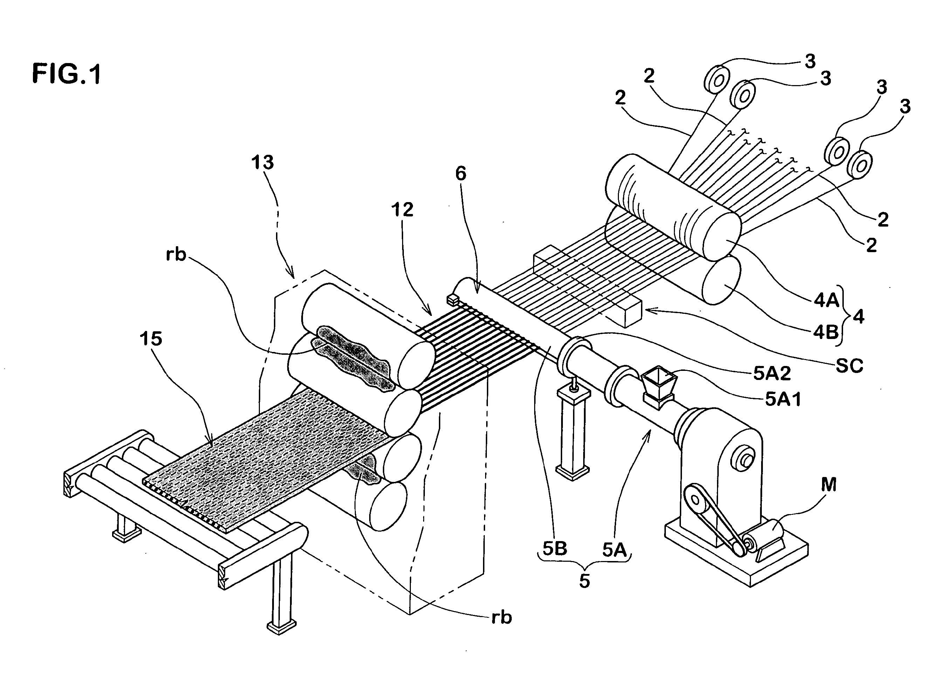

Fig. 1 shows one example of an apparatus which carries out the producing method of steel cord ply of the invention. This apparatus is only one example and the apparatus is not limited to the concrete structure.

The producing method of a steel cord ply of this invention comprises at least a first topping step and a second topping step.

In the first topping step, each steel cords 2 pulled out from a plurality of reel bodies 3 are arranged in parallel to each other and supplied to a first topping apparatus 5.

A structure of the steel cord 2 is not especially limited, and the structure is appropriately selected in accordance with a target ply such as 1×5, 1×4, 1×3, 2+2, 2+3. Although the steel cord 2 is illustrated as a solid single cord for convenience sake in the drawing, a stranded cord comprising a plurality of stranded steel strands is used in reality.

When the steel cords 2 pass through an arranging roll 4, the steel cords 2 are arranged substantially in parallel to each other. The arranging roll 4 includes rotatable roll bodies 4A and 4B which sandwich the steel cords 2 from above and below. In this embodiment, an outer peripheral surface of at least one of the roll bodies is formed with a guide groove into which a portion of the steel cords 2 are fitted. The guide groove is formed in the circumferential direction. With this, a plurality of the steel cords 2 sent out from the arranging roll 4 are arranged in parallel smoothly without generating resistance. As the arranging means, a comb-like body provided with slit-like guide hole can also be used instead of the roll 4.

In this embodiment, the first topping apparatus 5 includes a small rubber extruding portion 5A, and a rubber attaching tool 5B mounted on a tip end of the rubber extruding portion 5A. The rubber extruding portion 5A includes an input port 5A1 into which material of first topping rubber is charged, and an extruding port 5A2 from which kneaded and plasticized first topping rubber is discharged. As the rubber extruding portion 5A, a known screw type rubber extruder having a screw shaft rotated by a motor M can be suitably used.

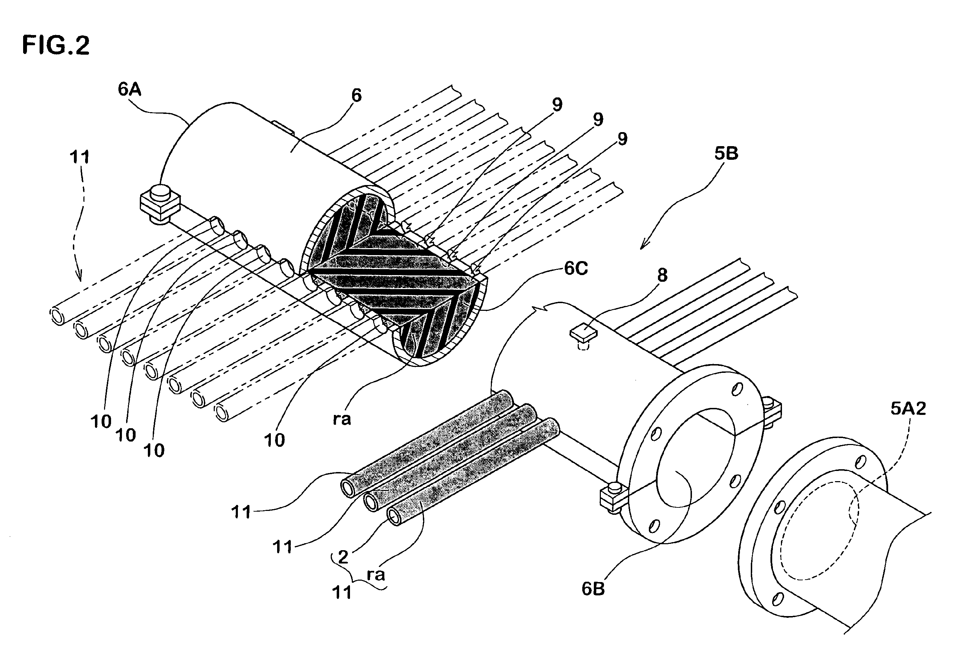

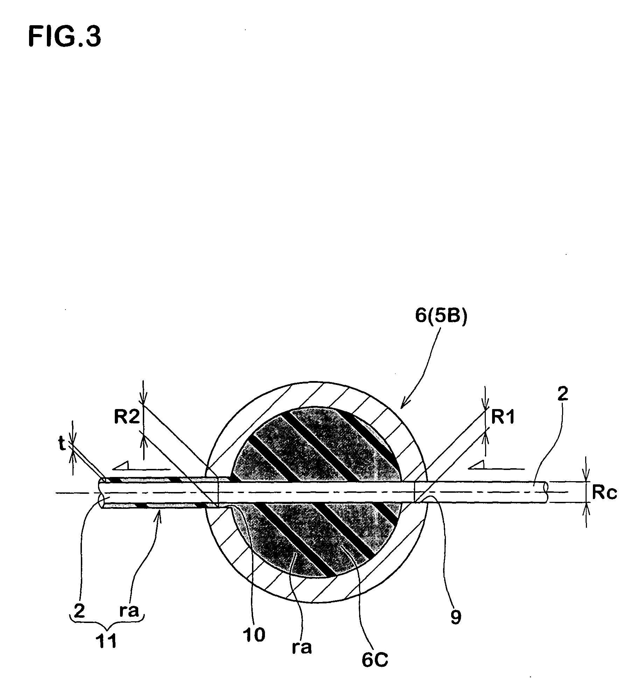

As shown in Figs. 2 and 3, the rubber attaching tool 5B comprises a pipe-like base body 6 connected to the extruding port 5A2 of the rubber extruding portion 5A.

The base body 6 includes a hollow topping chamber 6C therein. A tip end 6A of the base body 6 is closed, and a rear end 6B of the base body 6 is provided with an opening which can be in communication with the extruding port 5A2. If the rear end 6B of the base body 6 is fixed to the rubber extruding portion 5A using a flange for example, first topping rubber ra can be charged into a topping chamber 6C of the base body 6 under predetermined pressure. The base body 6 can be, for example, split into two pieces. With this, the maintenance of the topping chamber 6C is facilitated.

The base body 6 is provided at its upstream wall surface in a steel cord supplying direction with a plurality of first guiding holes 9 through which the steel cords 2 pass. The first holes 9 are formed at distances from one another in an axial direction of the base body 6. The base body 6 is also provided at its downstream wall surface with second coating holes 10 at positions corresponding to the holes 9. The second hole 10 is concentric with the hole 9 and has a diameter R2 greater than a diameter R1 of the hole 9. The rubber attaching tool 5B is provided with a pressure sensor 8 capable of detecting pressure in the topping chamber 6C. An output from the pressure sensor 8 is sent to a control apparatus of the rubber extruding portion 5A, and a rubber supply amount of the rubber extruding portion 5A is automatically controlled such that the rubber pressure of the topping chamber 6C becomes equal to a predetermined value.

As shown in Figs. 2 and 3, the steel cords 2 which were arranged in parallel to one another by the arranging roll 4 pass through the topping chamber 6C from the first holes 9 of the base body 6 and are sent out from the second holes 10. At that time, the steel cords 2 are pulled out straightly such that the steel cords 2 are aligned with respect to a center of each of the holes 9 and 10. In the topping chamber 6C, first topping rubber ra supplied under high rubber pressure permeates a gap between the strands of the steel cords 2, and attaches to a periphery of the steel cord. In the second hole 10, the first topping rubber ra attached to the steel cord 2 is sliced off except a thin coating layer concentrically attached the periphery of the steel cord 2. With this, a steel cord 11 having rubber to which the first topping rubber ra is concentrically attached can be formed around each steel cord 2.

Especially in this embodiment, since the steel cords 2 pass through the high pressure first topping rubber ra, even if the passing speed is fast, the first topping rubber ra can sufficiently and effectively permeate the fine gap between the strands of the steel cords 2. The pressure in the topping chamber 6C is controlled in a desired range by the pressure sensor 8. Therefore, the attaching efficiency of the first topping rubber ra to the steel cord 2 can be enhanced, and stable and reliably topping can be carried out.

In the topping, the pressure in the topping chamber 6C is preferably 5,000 kPa or higher and more preferably 10,000 kPa or higher. If the pressure in the topping chamber 6C is less than 5,000 kPa, there is a tendency that the attaching or permeating effect of rubber with respect to the steel cord 2 is deteriorated. If the pressure is excessively high, there is a tendency that excessive topping rubber ra flows out from the first and second holes 9 and 10, the resistance caused when the steel cord 2 is moved becomes greater and the productivity is deteriorated. Due to such reasons, the pressure is preferably 35,000 kPa or lower and more preferably 20,000 kPa or lower. The sending speed of the steel cord is preferably in a range of 5 to 30 m/min, and more preferably in a range of 10 to 30 m/min.

Concerning the term "concentric", it is unnecessary that a border line of a cross section of the first topping rubber ra is physically completely concentric with a border line of a cross section of the steel cord 2, and the "concentric" may be in such a degree that the above apparatus can form the first topping rubber ra.

The diameter R1 of the first hole 9 is preferably in a range of 101 to 107% of the outer diameter Rc of the steel cord 2, and more preferably in a range of 103 to 105% thereof. If the diameter R1 of the first hole 9 is less than 101% of the outer diameter Rc of the steel cord 2, there is an adverse possibility that the cord is damaged when the steel cord 2 passes through the first hole 9. If the diameter exceeds 107%, it becomes difficult to perform centering of the cords, an amount of topping rubber flowing out from the gap between the steel cords 2 becomes excessively great, and this makes it difficult to increase the pressure in the topping chamber 6C, and non-uniform toppings having large variation tend to be produced.

The diameter R2 of the second hole 10 is preferably in a range of 102 to 110% of the outer diameter Rc of the steel cord 2 and more preferably in a range of 103 to 105% thereof. If the diameter R2 of the second hole 10 is less than 102% of the outer diameter Rc of the steel cord 2, the coating thickness (t) (shown in Fig. 3) made by the first topping rubber ra becomes excessively small, and this is disadvantageous in terms of peeling off properties. If the diameter R2 exceeds 107%, the coating thickness (t) becomes excessively thick, and there is a tendency that the ply thickness is increased. It is preferable that the coating thickness (t) is 0.1 to 0. 5 mm. Here, the coating thickness (t) is an average value of the maximum value and minimum value.

Next, the second topping step is carried out in such a manner that a second topping rubber rb is attached to at least one surface of a steel cord array 12 in which the steel cords 11 having rubber are arranged. In this embodiment, four known calender rolls 13 are used. With this, both surfaces of the steel cord array 12 of the steel cords 11 having rubber can be coated with second topping rubbers rb and rb, and a sheet-like steel cord ply 15 can be formed.

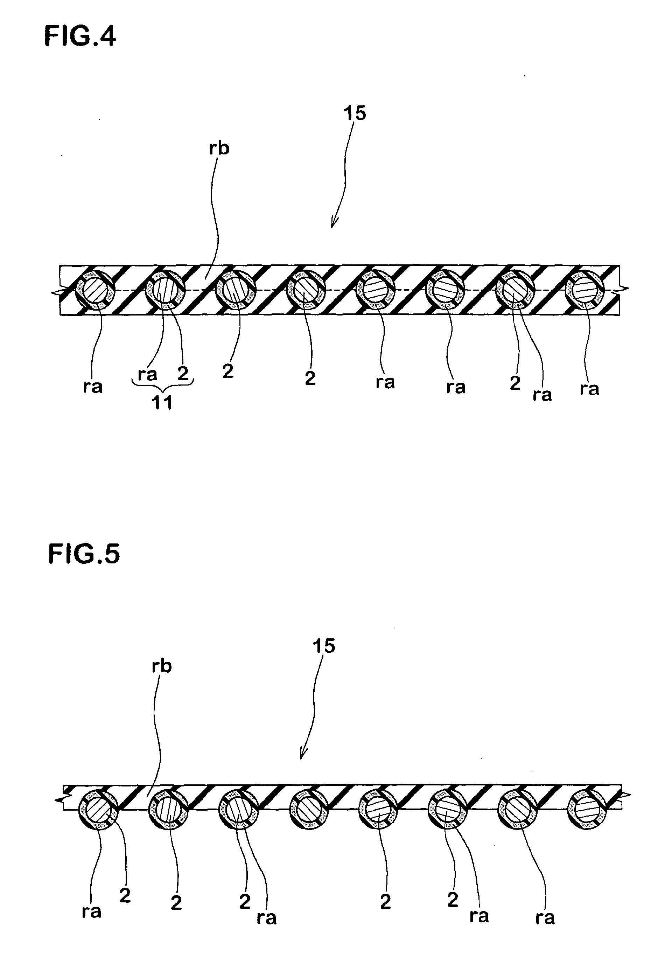

As shown in Fig. 4, the steel cord ply 15 comprises the steel cords 2 which are arranged substantially in parallel to one another, the first topping rubbers ra each of which concentrically coats the steel cord 2, and the sheet-like second topping rubbers rb each of which coats the first topping rubber ra. In the steel cord ply 15, in the first topping step, the first topping rubber ra sufficiently permeates between the steel strands. Therefore, the adhesive strength between the first topping rubber and the steel cord 2 can be enhanced. Further, since it is unnecessary to consider the rubber permeability in a gap between the steel strands in the second topping step, the calender speed can be increased and the productivity can be enhanced.

In this embodiment, both the surfaces of the steel cord array 12 of the steel cords 11 having rubber are completely coated with the second topping rubber rb. Alternatively, only one surface of the steel cord array 12 may be coated with the second topping rubber rb as shown in Fig. 5.

In this invention, it is necessary that the first topping step is carried out immediately before the second topping step. Since the steel cord 2 is pre-coated with the first topping rubber ra under high pressure, the adhesive strength at this portion can be increased. As a result of various experiments, it was found that if the second topping rubber rb was immediately attached to the first topping rubber ra, the adhesive strength between both the rubber materials could be enhanced.

An unvulcanized rubber is kneaded and plasticized usually at high temperature of about 80 to 100°C. This is because that if the temperature is higher than this range, the rubber is burned, and if the temperature is lower than this range, the rubber becomes hardened and it becomes difficult to knead the rubber. If the temperature of a kneaded rubber is reduced, a bleed in which liquid such as oil oozes from its surface, or a blooming in which power such as sulfur, antioxidant and wax is deposited is generated. Such phenomenon forms an interface which lowers cohesiveness on a surface of the rubber. In this invention, since the first topping step is carried out immediately before the second topping step, the second topping rubber rb can be attached to the first topping rubber ra before the temperature is lowered. Therefore, the interface is not produced on the surface of the first topping rubber ra, the adhesive strength between the topping rubbers ra and rb is enhanced, and the peel strength between both the rubber materials can largely be enhanced.

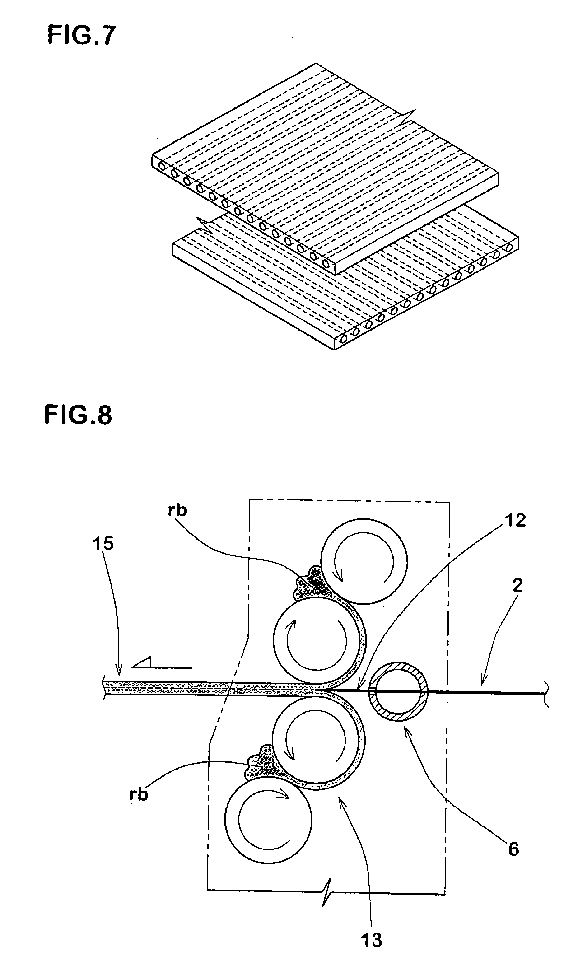

Here, the expression "immediately before" has such a degree that the steel cord 11 having rubber obtained in the first topping step should continuously be supplied to the second topping step without temporarily storing the steel cord 11 in another place. This degree varies depending upon layout of the apparatus, scale of the equipment and the like, and it is desirable that the steel cord 11 having rubber obtained in the first topping step is supplied to the second topping step preferably within 10 minutes, more preferably within 5 minutes, still more preferably within 3 minutes and most preferably immediately after the first topping step. This can be carried out by providing the base body 6 of the first topping apparatus 5 immediately before the upstream side of the four calender rolls 13 and by integrally forming the apparatus as shown in Fig. 8. With this, the producing equipment can also be reduced in size.

Even if the first topping rubber ra has the same rubber composite as that of the second topping rubber rb, the enhancing effect of the peel strength of the steel cord ply 15 can also be obtained by the above-described effect. However, it is preferable that the composite of the first topping rubber ra has greater complex elastic modulus than that of the composite of the second topping rubber rb. The complex elastic modulus is a value after the vulcanization the topping rubbers ra and rb.

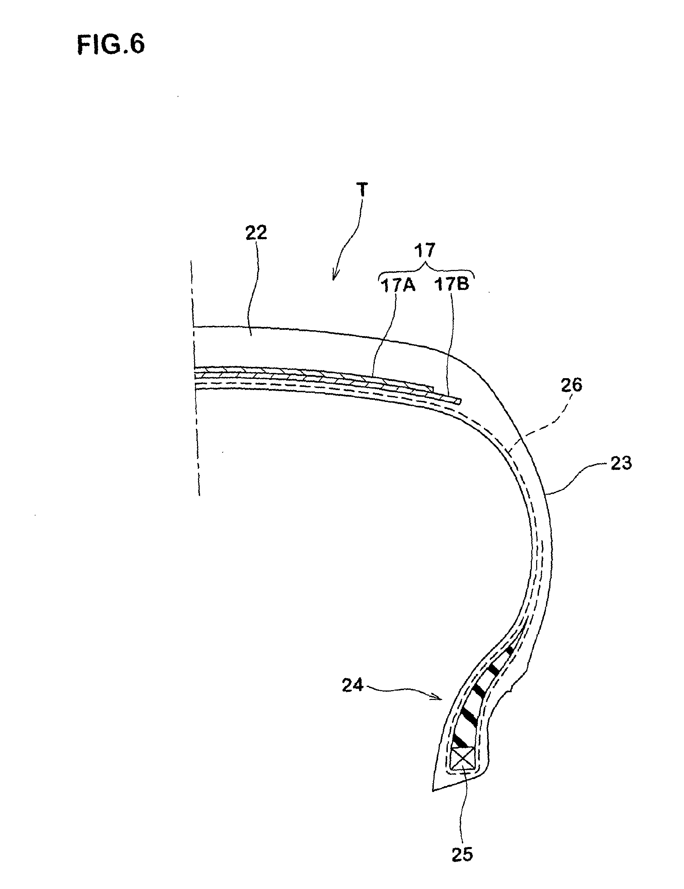

Generally, stress is concentrated on the interface between the steel cord 2 and the rubber due to a large rigidity difference therebetween. In order to even slightly moderate the stress concentration, it is effective to increase the complex elastic modulus of the topping rubber and to eliminate the rigidity difference with respect to the steel cord. When the steel cord ply 15 is used for belt plies 17A and 17B of the pneumatic tire T are used as shown in Fig. 6, however, if the rubber composite having large complex elastic modulus is used for the entire topping rubber, the belt rigidity is increased and the riding comfort is largely deteriorated. However, if only the complex elastic modulus of the first topping rubber ra is relatively increased, the peel strength of the belt ply can be enhanced without deteriorating the riding comfort in the pneumatic tire. Since the rigidity is gradually reduced (varied) outward as viewed from the steel cord 2, the rigidity difference is moderated, the stress concentration can be prevented and the peel strength can be thus enhanced.

When the complex elastic moduli of the first and second topping rubbers ra and rb are to be set different from each other, it is preferable that a ratio (E*1/E*2) between a complex elastic modulus E*1 of the first topping rubber ra and a complex elastic modulus E*2 of the second topping rubber rb is 1.15 to 1.80. If the ratio (E*1/E*2) is less than 1.15, since the difference between the complex elastic moduli is too small, the effect can not be obtained sufficiently. If the ratio exceeds 1. 80, the difference between the complex elastic moduli becomes excessively large, the stress concentration is prone to be generated at the interface between the first and second topping rubbers ra and rb. Therefore, it is especially preferable that the ratio (E*1/E*2) is in a range of 1.3 to 1.5.

In the case of the belt plies 17A and 17B of the pneumatic tire T, it is preferable that the complex elastic modulus E*1 of the first topping rubber ra is in a range of 5.0 to 8.0 MPa. In the pneumatic tire T, the belt layer 17 comprising the belt plies 17A and 17B is disposed radially outside of the carcass 26 and inside of the tread portion 22. In each of the belt plies 17A, the steel cords 2 are inclined with respect to the circumferential direction of the tire, for example, at an angle of 15 to 45°. As is known, the number of belt plies, the inclination angle of the steel cords 2 and the like can appropriately be changed in accordance with categories of tires. The carcass 26 forms a skeleton of the tire, and extends from the tread portion 22 to a bead core 25 of a bead portion 24 through a sidewall portion 23.

Although the especially preferable embodiment of the present invention has been explained above in detail, the invention is not limited to the illustrated embodiment and can be variously modified and carried out. Especially since the present invention has features in the producing method, the first and second topping steps can be carried out using various apparatuses and equipment in addition to the illustrated apparatus.

### Examples

Two unvulcanized steel cord plies obtained by the producing method of the invention were prototyped based on the specification shown in Table 1. As shown in Fig. 7, the steel cord plies were bonded to each other such that their steel cords intersect with each other, and they were vulcanized and adhered to each other under conditions of temperature (165 to 170°C), load (200 to 250 kN) and time (15 to 20 minutes). The specification of the steel cord ply is as follows:
Steel cord structure: 1×3/0.27
Entire thickness of ply: 1.10 mm
Coating thickness (t) of first topping rubber: average 0.1 mm
Cord count: 40/5 cm

The adhesive strength of the steel cord of this sample was tested, and this was compared with samples (conventional example, comparative examples) which used plies obtained by the conventional producing method and methods other than that of the present invention. In the conventional example, the ply formed by the topping step explained with reference to Fig. 9 was used.

The adhesive strength was measured by a tensile tester (Strograph T TF-50 produced by Toyo Seiki Seisaku-Sho, Ltd.) under a condition of peel width of 25 mm. A result of the test is indicated with indices in which the conventional example is indicated as 100. The greater the numeric value, more excellent the result is.

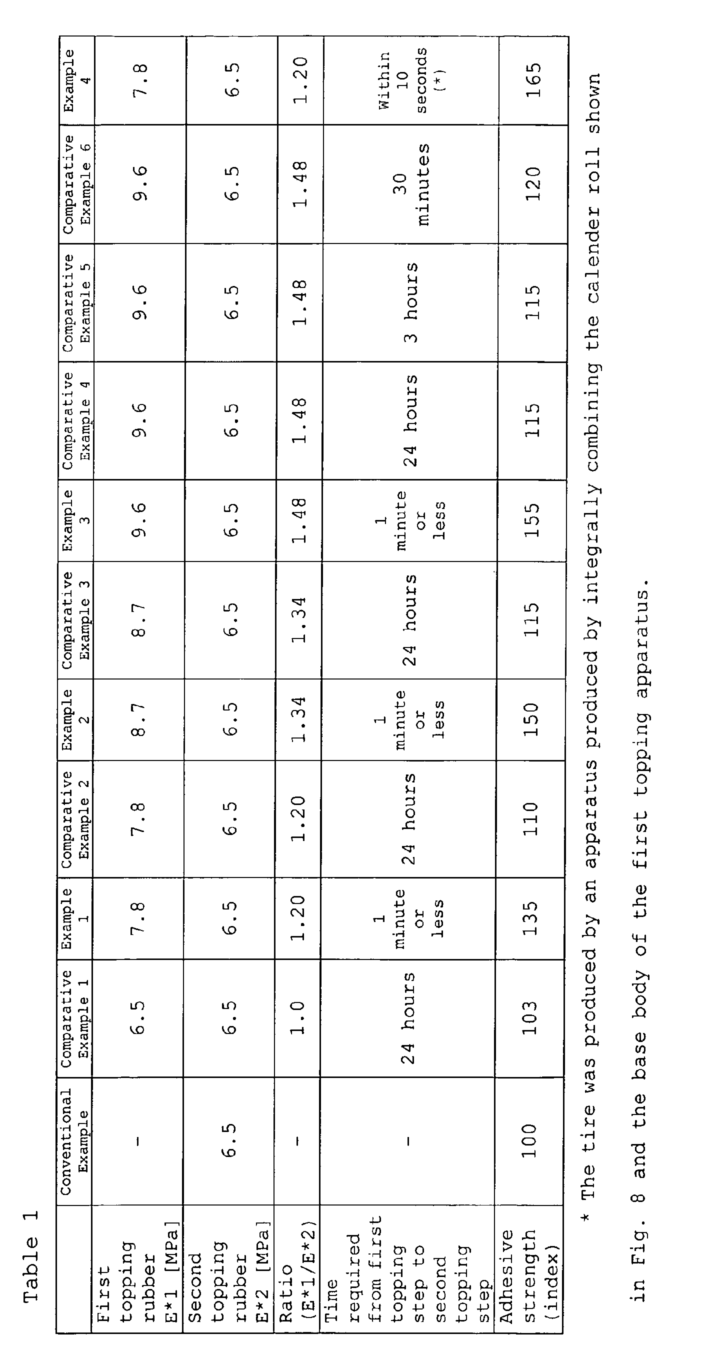

As the result of the test, it can be confirmed that in the steel cord plies of the example tires of this invention, the adhesive strength was remarkably enhanced.

Next, passenger vehicle radial tires (195/65R15) as shown in Fig. 6 were prototyped using the steel cord ply of Comparative Example 1 and Example 3 for the belt layer 17, and riding comfort and steering stability were evaluated. The evaluation method is as follows:

### <Steering stability>

The prototyped tires were mounted to all wheels of a Japanese FF vehicle having a piston displacement of 2000cm³, internal pressure of 200 kPa was charged into each tire, and the vehicle was allowed to run on a dry asphalt road test course. In the vehicle, there was only one person (driver).
Characteristics concerning steering wheel response, rigidity feeling, grip and the like were evaluated on the sensory base of the driver. A result thereof is indicated with indices in which Comparative Example 1 is indicated as 100. The greater the numeric value, more excellent the result is.

### <Riding comfort>

Using the same test vehicle, stiff feeling, thrust feeling and damping were evaluated on the sensory base on an uneven dry asphalt road, a Belgian block road (a stone-paved road), and a Bitzman road (pebble road), damping was evaluated on the sensory base, and a result thereof is indicated with indices in which Comparative Example 1 is indicated as 100. The greater the numeric value, more excellent the result is. Table 2 shows the test result.

**Table 2**

| | Comparative Example 1 | Example 3 |
|---|---|---|
| Steering stability (index) | 100 | 110 |
| Riding comfort (index) | 100 | 110 |

As a result of the test, it could be confirmed that with Example 3, the riding comfort was enhanced while maintaining the steering stability at the same level.

## Claims

1. A producing method of a sheet-like steel cord ply, comprising:
a first topping step for concentrically attaching a first topping rubber to a periphery of each steel cords used for the steel cord ply, thereby forming a steel cord having rubber pre-coated with the first topping rubber; and
a second topping step for attaching a second topping rubber to at least one surface of a steel cord array in which the steel cords having rubber are arranged, thereby forming a sheet-like steel cord ply; wherein
the first topping step is carried out immediately before the second topping step.

2. The producing method of a steel cord ply according to claim 1, wherein the first topping step includes a passing step in which the steel cord passes through the high pressure first topping rubber to be charged into a topping chamber.

3. The producing method of a steel cord ply according to claim 2, wherein a pressure of the first topping rubber in the topping chamber is 5,000 kPa or higher.

4. The producing method of a steel cord ply according to any one of claims 1 to 3, wherein a time interval between the first topping step and the second topping step is within 10 minutes.

5. The producing method of a steel cord ply according to any one of claims 1 to 4, wherein the first topping rubber has the same rubber composite as that of the second topping rubber.

6. The producing method of a steel cord ply according to any one of claims 1 to 4, wherein the first topping rubber has a rubber composite having greater complex elastic modulus than that of the second topping rubber.

7. The producing method of a steel cord ply according to claim 6, wherein a ratio (E*1/E*2) of complex elastic modulus E*1 of the first topping rubber to complex elastic modulus E*2 of the second topping rubber is 1.15 to 1.80.

8. A steel cord ply comprising
steel cords arranged substantially in parallel to each other;
a first topping rubber concentrically coating a periphery of each steel cords; and
a sheet-like second topping rubber for coating a periphery of the first topping rubber and made of rubber composite having smaller complex elastic modulus than that of the first topping rubber.

9. A pneumatic tire in which the steel cord ply according to claim 8 is used as a belt ply.
